# FASCICULE DE BREVET EUROPEEN

(11) **EP 0 491 624 B1**
(45) Date de publication et mention de la délivrance du brevet: **03.08.1994**
(21) Numéro de dépôt: 91403434.3
(22) Date de dépôt: 18.12.1991
(51) Int. Cl.: F16J 15/40

(54) **Système d'étanchéité pour palier d'une machine, notamment d'une turbomachine**
Dichtungsanordnung für Lagerung einer Maschine, insbesondere für Turbomaschine
Sealing system for bearing of a machine, particularly for turbomachine

(30) Priorité: 19.12.1990 FR 9015912
(43) Date de publication de la demande: 24.06.1992
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Totain, Didier Jean André, F-77720 Mormant (FR)

(56) Documents cités:
- DE-A- 1 675 359
- FR-A- 2 644 205

## Description

Il est fréquent dans un palier de machine, notamment de turbomachine, de disposer un arbre qui doit traverser une cloison de carter séparant deux enceintes, dont l'une contient de l'air et de l'huile et sera par convention appelée dans la suite enceinte à huile et dont l'autre contient de l'air et doit être maintenue exempte d'huile et elle sera dans la suite appelée enceinte à air. Une étanchéité doit par conséquent être assurée dans cette traversée de cloison.

Plusieurs solutions ont été mises en oeuvre dans ce but. Le document EP-A-0 110 804 décrit un exemple de réalisation comportant un joint d'étanchéité rotatif monté sur un arbre, associé à un élément formant valve.

Une autre solution prévoit de monter sur un arbre, au niveau d'une traversée de cloison, un boîtier équipé comportant une vrille de déshuilage coopérant avec la surface externe de l'arbre et une bague en carbone, graphite ou carbone amorphe, segmentée ou non, directement montée et pré-assemblée sur le boîtier. Cette solution facilitant la mise en oeuvre présente toutefois l'inconvénient d'alourdir le dispositif et d'en élever le coût.

Une autre solution décrite dans le document FR-A-2 644 205, qui illustre le dispositif décrit dans le préambule de la revendication 1, consiste à prévoir au niveau du carter une vrille de déshuilage qui coopère directement avec l'arbre et à utiliser un joint d'étanchéité intégré se composant d'une bague segmentée en carbone, formant le joint radial.

Les segments sont solidarisés au moyen d'un anneau élastique logé dans une gorge périphérique de ces segments et comportent, sur leur face d'étanchéité dynamique des cavités de décharge ayant pour objet de limiter la pression spécifique entre joint carbone et rotor en fonctionnenent. Le joint d'étanchéité intégré comporte également une bague de retenue reliée au carter par des moyens de verrouillage.

Le joint radial constitué de la bague segmentée en carbone est très efficace lorsque la pression de l'enceinte à air est supérieure à celle de l'enceinte à huile. L'étanchéité est améliorée en rajoutant le système complémentaire constitué par la vrille de déshuilage, mais reste insuffisante pour certains cas de fonctionnement.

En effet, le jeu existant entre la vrille et l'arbre est trop important pour assurer un déshuilage suffisant car l'on constate que malgré tout de l'huile parvient à traverser cette vrille et à passer le joint en carbone pour atteindre l'enceinte à air.

Or le jeu est imposé par le fonctionnement du moteur et doit donc permettre tout aussi bien le fonctionnement à bas régime qu'à haut régime.

Le système d'étanchéité décrit dans ce brevet ne permet donc pas d'obtenir une parfaite étanchéité pour toutes les configurations possibles de fonctionnement du moteur.

La solution proposée par l'invention évite les divers inconvénients des solutions connues antérieures.

L'invention a plus particulièrement pour objet un système d'étanchéité pour palier d'une machine, notamment d'une turbomachine, dans laquelle un arbre est disposé à l'intérieur d'un carter comportant une cloison traversée par l'arbre et séparant une enceinte à air et une enceinte à huile, le carter comportant un bossage axial du côté de l'enceinte à huile, un joint d'étanchéité rapporté au carter étant disposé entre l'arbre et la cloison, dans un logement ménagé dans le carter, et le bossage axial comportant une vrille de déshuilage en regard de la surface externe de l'arbre, caractérisé en ce qu'il comprend un dispositif de génération d'un débit d'air pour refouler l'huile pénétrant dans l'espace existant entre le bossage et l'arbre vers l'enceinte à huile, en ce que le bossage axial comporte une pluralité de perforations et en ce que le débit d'air est obtenu par une source d'air formée par l'air présent dans l'enceinte à huile, l'enceinte à huile comportant des moyens de rétention de l'huile empêchant le passage de l'huile par les arrivées d'air du bossage axial.

Selon une autre caractéristique de l'invention, le système d'étanchéité comprend des moyens de compression d'air permettant d'augmenter la différence de pression entre l'entrée d'air dans le bossage et la sortie du bossage, le système fonctionnant comme une pompe à air.

La pression entre l'entrée de la vrille de déshuilage et sa sortie peut être augmentée en réalisant une vrille à pas variable. Cette pression peut également être augmentée en réalisant une vrille à hauteur du filet variable.

L'effet de pompe à air peut être renforcé en réalisant des motifs, formant obstacles pour l'air, autour de l'arbre, en regard de la vrille de déshuilage, pour augmenter l'entraînement de l'air lorsque l'arbre est en rotation et ainsi améliorer le refoulement de l'huile. L'effet de pompe est dû à la combinaison de deux éléments :
- entraînement de l'air en rotation par l'arbre,
- canalisation de cet air vers l'enceinte à huile par la vrille qui, grâce à une évolution de section (pas variable...) permet d'améliorer le système en accélérant et comprimant l'air la traversant.

Les motifs peuvent être constitués de rainures axiales ou de rainures inclinées, ou encore d'une vrille.

Les moyens de déshuilage de l'air d'alimentation du système peuvent être constitués par un déflecteur multiperforé, associé à des moyens de drainage de l'huile captée par le déflecteur.

Selon une autre caractéristique de l'invention, la source d'air est issue d'une zone protégée de l'enceinte à huile.

D'autres caractéristiques et avantages de l'invention ressortiront mieux de la description qui va suivre, donnée à titre illustratif mais non limitatif, en référence aux dessins sur lesquels :
- la figure 1 représente le palier d'une machine avec un système d'étanchéité selon l'art antérieur,
- la figure 2 représente un système d'étanchéité pour palier muni de moyens de compression, conformément à l'invention,
- les figures 3a, 3b et 4 permettent de représenter des variantes de réalisation des motifs réalisés sur l'arbre moteur,
- la figure 5 permet d'illustrer les multiperforations dans le cas où la source d'air est issue de l'enceinte à huile,
- la figure 6 permet d'illustrer un déflecteur multiperforé dans le cas également où la source d'air est issue de l'enceinte à huile.

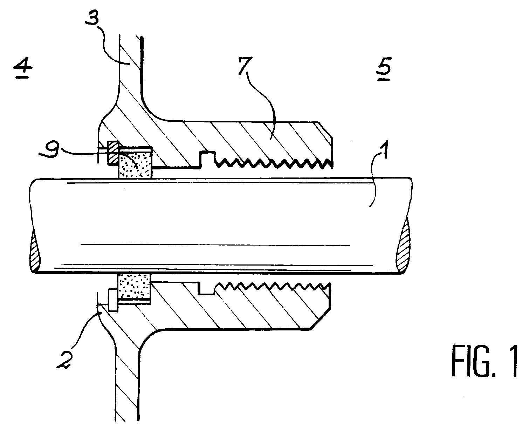

La figure 1 représente un système d'étanchéité conforme à l'art antérieur tel que décrit par exemple dans le document FR-A- 2 644 205.

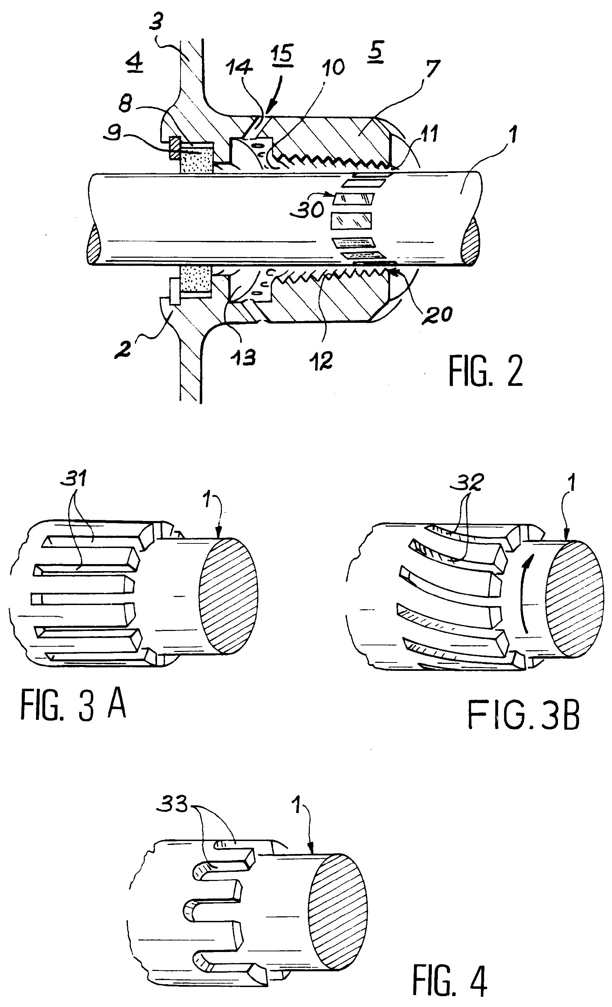

La figure 2 représente un système d'étanchéité pour palier, conformément à l'invention. Dans un palier de machine ou de turbomachine d'un type connu en soi, un arbre 1 est supporté en rotation par un palier dont seule une partie est représentée sur cette figure 2. Un carter 2 comporte une cloison 3 qui ménage deux enceintes de palier, une enceinte 4 à air d'un côté de la cloison 3 et une enceinte 5 à huile de l'autre côté de cette cloison. Le carter 2 comporte un bossage axial 7 disposé en regard de la surface externe de l'arbre 1.

A l'extrémité radialement interne de la cloison 3 de séparation des enceintes 4 et 5, est ménagé dans le carter le logement annulaire 8 dans lequel est placé un joint d'étanchéité 9 rapporté au carter 2.

Une gorge de dégagement 13 a été ménagée sur le bossage axial 7 entre l'emplacement du joint et la section d'entrée 10 du bossage 7. Le carter 2 a été perforé au-dessus de cette gorge de dégagement 14 de manière à réaliser des arrivées d'air aboutissant dans l'espace délimité par la gorge.

Un débit d'air peut donc être introduit au moyen de ces arrivées dans la gorge de dégagement et être entraîné par l'arbre en rotation sous l'effet des frottements et ainsi refouler l'huile qui a tendance à pénétrer dans l'espace existant entre le carter et l'arbre.

Le joint d'étanchéité 9 peut être de type connu. On peut par exemple utiliser un joint radial segmenté de type carbone ou un joint à brosse.

Le dispositif de génération de débit d'air ainsi réalisé a les fonctions d'un minicompresseur. Il permet en effet de canaliser l'air pénétrant par les entrées 14, cet air étant mis en mouvement par l'arbre en rotation et éjecté dans l'enceinte à huile avec un maximum d'efficacité.

Afin d'augmenter au maximum la vitesse et le débit de sortie de l'air pénétrant dans les entrées 14, des moyens peuvent être prévus pour augmenter la section d'entrée 10 par rapport à la section de sortie 11.

Ces moyens consistent à faire évoluer les sections de passage de l'air, ceci ayant pour effet d'augmenter les différences de pression entre l'entrée 10 et la sortie 11 du minicompresseur. Ainsi, le bossage axial 7 est équipé d'une hélice ou d'une vrille 20 avec section évolutive. Le pas des filets 12 de la vrille peut être variable de manière à diminuer de l'entrée 10 vers la sortie 11. Une autre façon d'augmenter les différences de pression entre l'entrée 10 et la sortie 11 peut consister à réaliser une vrille 20 dont la hauteur des filets est variable et va en augmentant vers la sortie 11.

A ces moyens peuvent être combinés des moyens qui vont augmenter la capacité de l'arbre à entraîner l'air en rotation. Différentes solutions possibles ont été représentées sur les figures 3a, 3b et 4. Ces solutions consistent en fait à réaliser des motifs sur l'arbre 1. En fonction des applications particulières, la réalisation d'une vrille à effet dynamique peut être envisagée sur l'arbre 1.

La figure 2 permet de montrer un arbre sur lequel on a réalisé des facettes 30. Les motifs sont dans le cas de la figure 3a des rainures 31 disposées dans l'axe de l'arbre 1. La figure 3b illustre des motifs constitués par des rainures 32 inclinées par rapport à l'axe de l'arbre 1.

La figure 4 illustre des écopes 33 que l'on peut obtenir par exemple par fraisage.

La source d'air (15) doit permettre l'alimentation du minicompresseur. Elle ne doit pas bien évidemment véhiculer de l'huile. Conformément à l'invention, la source d'air est interne au palier. Ainsi, l'air est prélevé de l'enceinte à huile. Pour cela l'air doit être épuré d'huile.

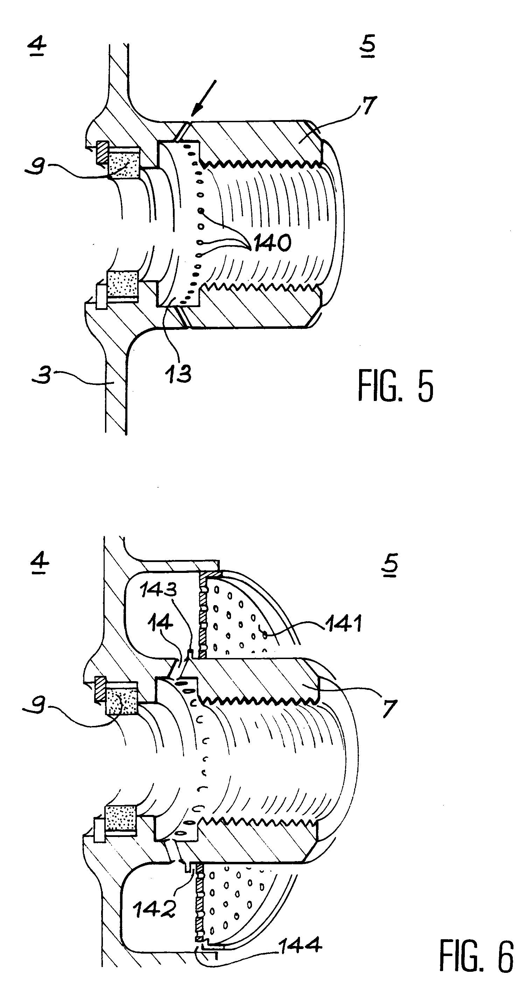

La figure 5 représente un mode de réalisation adapté à ce prélèvement interne d'air dans l'enceinte à huile. L'arrivée d'air se fait dans ce cas par un système à multiperforation 140. Ces multiperforations 140 réalisées dans le carter au voisinage de la gorge de dégagement permettent de répartir de l'air issu de l'enceinte à huile au niveau de chacune des arrivées, tout en permettant un arrêt de l'huile.

Sur la figure 6, on a illustré un autre mode de réalisation qui permet d'utiliser comme source, l'air de l'enceinte à huile. Selon ce mode de réalisation, on place un déflecteur multiperforé 141 dans l'enceinte à huile pour permettre une condensation de l'huile sur la tôle et un renvoi vers l'enceinte à huile par l'intermédiaire d'une gorge 142 de récupération bordée par une collerette 143 circonférentielle et d'un trou 144 de réintroduction situé au point bas, ainsi l'air pénétrant par l'entrée 14 est épuré de l'huile de l'enceinte à huile.

## Revendications

1. Système d'étanchéité pour palier d'une machine, notamment d'une turbomachine, dans laquelle un arbre est disposé à l'intérieur d'un carter (2) comportant une cloison (3) traversée par l'arbre et séparant une enceinte à air (4) et une enceinte à huile (5), le carter comportant un bossage axial (7) du côté de l'enceinte à huile, un joint d'étanchéité (9) rapporté au carter étant disposé entre l'arbre (1) et la cloison (3), dans un logement ménagé dans le carter, et le bossage axial (7) comportant une vrille de déshuilage (20) en regard de la surface externe de l'arbre, caractérisé en ce qu'il comprend un dispositif de génération d'un débit d'air pour refouler l'huile pénétrant dans l'espace existant entre le bossage (7) et l'arbre vers enceinte à huile, en ce que le bossage axial (7) comporte une pluralité de perforations (140) et en ce que le débit d'air est obtenu par une source d'air (15) formée par l'air présent dans l'enceinte à huile, l'enceinte à huile comportant des moyens de rétention de l'huile empêchant le passage de l'huile par les arrivées d'air du bossage axial (7).

2. Système d'étanchéité selon la revendication 1, caractérisé en ce que le système comporte des moyens de compression d'air (20, 12) permettant d'augmenter la différence de pression entre l'entrée d'air dans le bossage axial et la sortie du bossage.

3. Système d'étanchéité selon la revendication 1, caractérisé en ce que la vrille de déshuilage (20) est à pas variable.

4. Système d'étanchéité selon la revendication 1, caractérisé en ce que la vrille de déshuilage (20) a une hauteur de filet variable.

5. Système d'étanchéité selon l'une quelconque des revendications 1 à 4, caractérisé en ce que la surface de l'arbre en regard avec la vrille de déshuilage (20) comporte des motifs pour entraîner l'air lorsque l'arbre est en rotation et refouler l'huile.

6. Système d'étanchéité selon la revendication 5, caractérisé en ce que les motifs sont des rainures (31).

7. Système d'étanchéité selon la revendication 5, en ce que les motifs sont des facettes (30).

8. Système d'étanchéité selon la revendication 1, caractérisé en ce que les moyens de rétention de l'huile sont constitués par un déflecteur multiperforé (141).

9. Système d'étanchéité selon la revendication 1, caractérisé en ce que la source d'air (15) est issue d'une zone protégée de l'enceinte à huile.

## Patentansprüche

1. Dichtungssystem für Lager einer Maschine, insbesondere einer Turbomaschine, mit einer Welle, die im Innern eines Gehäuses (2) angeordnet ist, das eine Trennwand (3) besitzt, durch die die Welle hindurchdringt und die eine Luftkammer (4) und eine Ölkammer (5) voneinander trennt, wobei das Gehäuse auf der Seite der ölkammer einen axialen Ansatz (7) aufweist und zwischen der Welle (1) und der Trennwand (3) in einer in dem Gehäuse ausgebildeten Aufnahme eine Dichtung (9) angebracht ist und wobei der axiale Ansatz (7) eine der Außenfläche der Welle gegenüberliegende Ölabweisschnecke (20) aufweist,
**dadurch gekennzeichnet,**
daß das Dichtungssystem eine Vorrichtung zur Erzeugung einer Luftströmung aufweist zum Zurückdrängen des in den zwischen dem Ansatz (7) und der Welle vorhandenen Zwischenraum eindringenden Öls in die Ölkammer,
daß der axiale Ansatz (7) eine Anzahl von durchgehenden Bohrungen (140) aufweist
und daß die Luftströmung durch eine Luftquelle (15) gewonnen wird, die von der in der Ölkammer vorhandenen Luft gebildet wird, wobei die Ölkammer Ölrückhaltemittel aufweist, die den Duchtritt des Öls durch die Lufteinlässe des axialen Ansatzes (7) verhindern.

2. Dichtungssystem nach Anspruch 1, dadurch gekennzeichnet, daß es Mittel (20, 12) zur Luftkompression aufweist, die eine Vergrößerung der Druckdifferenz zwischen dem Lufteintritt in den axialen Ansatz und dem Ausgang des Ansatzes ermöglichen.

3. Dichtungssystem nach Anspruch 1, dadurch gekennzeichnet, daß die Ölabweisschnecke (20) variable Steigung hat.

4. Dichtungssystem nach Anspruch 1, dadurch gekennzeichnet, daß die Ölabweisschnecke (20) eine variable Gewindehöhe hat.

5. Dichtungssystem nach einem der Ansprüche 1 bis 4, dadurch gekennzeichnet, daß die der Ölabweisschnecke (20) gegenüberliegende Fläche der Welle Muster aufweist, die bei Rotation der Welle die Luft mitreißen und das Öl zurückdrängen.

6. Dichtungssystem nach Anspruch 5, dadurch gekennzeichnet, daß die Muster von Nuten (31) gebildet sind.

7. Dichtungssystem nach Anspruch 5, dadurch gekennzeichnet, daß die Muster von Facetten (30) gebildet sind.

8. Dichtungssystem nach Anspruch 1, dadurch gekennzeichnet, daß die Ölrückhaltemittel aus einem mit zahlreichen Bohrungen versehenen Abweiser (141) bestehen.

9. Dichtungssystem nach Anspruch 1, dadurch gekennzeichnet, daß die Luftquelle (15) von einer geschützten Zone der Ölkammer ausgeht.

## Claims

1. Sealing system for a bearing of a machine, particularly of a turbomachine, in which a shaft is located inside a casing (2) including a partition (3) penetrated by the shaft and separating an air chamber (4) and an oil chamber (5), the casing including an axial boss (7) on the oil chamber side, a seal (9) connected to the casing being located between the shaft (1) and the partition (3), in a housing formed in the casing, and the axial boss (7) including a labyrinth seal (20) facing the external surface of the shaft, characterized in that it comprises a device for generating an air flow for discharging the oil penetrating into the space remaining between the boss (7) and the shaft towards the oil chamber, in that the axial boss (7) includes a plurality of perforations (140) and in that the air flow is obtained by a source of air (15) formed by the air present in the oil chamber, the oil chamber including means for retaining the oil preventing the oil from passing through the air intakes of the axial boss (7).

2. Sealing system according to Claim 1, characterized in that the system includes air compression means (20, 12) making it possible to increase the pressure difference between the air inlet into the axial boss and the outlet from the boss.

3. Sealing system according to Claim 1, characterized in that the labyrinth seal (20) has variable pitch.

4. Sealing system according to Claim 1, characterized in that the labyrinth seal (20) has a variable thread height.

5. Sealing system according to any one of Claims 1 to 4, characterized in that the surface of the shaft facing the labyrinth seal (20) includes patterns for entraining the air when the shaft is rotating and for discharging the oil.

6. Sealing system according to Claim 5, characterized in that the patterns are grooves (31).

7. Sealing system according to Claim 5, characterized in that the patterns are facets (30).

8. Sealing system according to Claim 1, characterized in that the oil retaining means consist of a multiperforated deflector (141).

9. Sealing system according to Claim 1, characterized in that the air source (15) comes from a protective zone of the oil chamber.
